# FASCICULE DE BREVET EUROPEEN

(11) **EP 0 639 336 B1**
(45) Date de publication et mention de la délivrance du brevet: **11.03.1998**
(21) Numéro de dépôt: 93113120.5
(22) Date de dépôt: 17.08.1993
(51) Int. Cl.: A23L 3/3463, A23L 1/221

(54) **Procédé d'extraction d'antioxydant d'origine végétale sous forme liquide**
Verfahren zum Extrahieren von pflanzlicher Antioxidanten in flüssiger Form
Process for extracting antioxydants of vegetable origin as liquids

(43) Date de publication de la demande: 22.02.1995
(73) Titulaire: SOCIETE DES PRODUITS NESTLE S.A., 1800 Vevey (CH)
(72) Inventeur: Aeschbach, Robert, CH-1800 Vevey (CH); Wille, Hans-Juergen, CH-1844 Villeneuve (CH)
(74) Mandataire: Archambault, Jean

(56) Documents cités:
- EP-A- 0 038 959
- EP-A- 0 040 178
- EP-A- 0 307 626
- EP-A- 0 507 064
- US-A- 2 115 073
- US-A- 3 950 266
- DATABASE WPI Section Ch, Week 8344, Derwent Publications Ltd., London, GB; Class D13, AN 83-805282 & JP-A-58 162 258 (KAO) 26 Septembre 1983

## Description

L'invention concerne un procédé d'extraction d'antioxydant à partir d'une substance végétale sous forme liquide.

Dans l'industrie alimentaire, on utilise des antioxydants dont le but est de retarder la dégradation oxydative des corps gras par inhibition de la formation de radicaux libres. Les antioxydants usuels de qualité alimentaire peuvent être d'origine synthétique, par exemple le butylhydroxyanisol (BHA), le butylhydroxytoluène (BHT), mais ceux-ci sont de plus en plus contestés dans les législations alimentaires ou, de préférence naturelle, principalement d'origine végétale provenant des extraits de plantes. Le romarin est actuellement la matière première la plus utilisée dans ce but.

Différentes méthodes ont été appliquées pour extraire les principes antioxydants des matières végétales et les mettre sous forme de poudre ou de liquide plus ou moins visqueux. Parmi les méthodes conduisant à un antioxydant sous forme de poudre, on a proposé, par exemple selon EP-A-0307626, une extraction en deux étapes impliquant l'emploi successif d'hexane, puis d'éthanol.

Comme exemple de procédé conduisant à un antioxydant sous forme liquide, EP-A-0507064 décrit un procédé de solubilisation d'antioxydants d'origine végétale dans un triglycéride à chaîne moyenne (MCT) par l'intermédiaire de solvants. Un tel triglycéride est liquide sur une vaste plage de températures, résiste à la dégradation oxydative et a un bon potentiel de dissolution pour les antioxydants d'origine végétale.

On connaît, par exemple de US-A-2115073, un procédé d 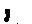 extraction de principes odorants et colorants par mise en contact d 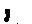 une huile de table avec des épices broyées, notamment du paprika ou du poivre rouge, puis filtration des résidus solides sur filtre Buchner, de manière à produire une huile odorante et colorée destinée à entrer dans la composition de sauces à salade et de mayonnaise.

Le but de la présente invention est de mettre à disposition une solution liquide, limpide, non thixotrope et qui ne forme aucun dépôt à l'entreposage, d'antioxydants d'origine végétale dans un support lipidique par une extraction mécanique simple en évitant la mise en oeuvre de solvants qu'il faudrait éliminer.

L'invention concerne donc un procédé d'extraction d'antioxydant à partir d'une substance végétale sous forme liquide, caractérisé par le fait que l'on met en contact une matière végétale riche en antioxydants et une huile servant de véhicule, que ladite huile est liquide à température ambiante, qu 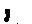 elle constitue un bon solvant des principes antioxydants et qu 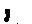 elle est peu sensible à l 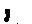 oxydation, puis que l 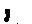 on presse le mélange à une pression supérieure ou égale à 40bar et on le filtre, en même temps qu 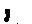 on le presse, pour le débarrasser des solides en suspension sans éliminer l'huile mise en oeuvre.

Comme matière végétale de départ, on peut utiliser toute épice contenant des antioxydants phénoliques comme le romarin, la sauge, le thym, l'origan, la sariette, le gingembre, le curcuma, le piment ou les pellicules de cacao seule ou en mélange. Parmi ces matières premières, le romarin constitue une matière de choix car elle contient les antioxydants acide carnosique et carnosol qui sont inodores, incolores et pratiquement insipides. La matière première peut être fraiche entière ou moulue plus ou moins finement. Elle peut être strippée à la vapeur pour en éliminer la majeure partie des principes odorants qui ne sont pas souhaités pour certaines applications dans lesquelles on désire que l'antioxydant soit aussi neutre que possible. Dans d'autres cas, on désire conserver dans l'antioxydant liquide une partie au moins des principes odorants des épices et la matière de départ n'est alors pas strippée. Elle se présente de préférence sous forme séchée, qu'elle soit moulue ou non, strippée ou non.

L'huile utilisée comme véhicule doit être liquide à la température ambiante, constituer un bon solvant des principes antioxydants et être peu sensible à l'oxydation, même à température élevée. Elle est choisie parmi un mélange de triglycérides d'acides gras saturés en C6-C12, l'huile d'olive, une huile hybride de carthame ou de tournesol, une huile végétale non laurique de graines de cotton ou de soja, hydrogénée et fractionnée. On utilise de préférence un triglycéride polaire, par exemple à chaîne moyenne (MCT) contenant les acides caprylique et caprique.

Le mélange de la matière première végétale et de l'huile peut se faire à température ambiante, par exemple à environ 20°C dans le cas où l'on désire garder au moins en partie les principes odorants d'une matière première constitant un cocktail d'épices. Le mélange peut également se faire à faire à température élevée, de 100 à 140°C et de préférence à environ 120°C dans le cas où l'on désire fabriquer un antioxydant neutre. Ce prétraitement peut avoir lieu par exemple dans un mélangeur sous forte agitation, dans un échangeur à surface raclée ou dans un injecteur de vapeur UHT, à la vapeur surchauffée. Sa durée peut être de préférence d'environ 60 min dans un mélangeur pour arriver à une extraction convenable des antioxydants. Dans les cas d'un échangeur à surface râclée et d'un injecteur de vapeur, la durée est de préférence de quelques s à quelques min.

On a constaté qu'il était avantageux d'effectuer le prétraitement en présence d'eau, en ajoutant au mélange, de préférence environ 10% en poids d'eau par rapport à la matière végétale de manière à augmenter la quantité d'antioxydant extrait.

Par ailleurs, un prétraitement enzymatique de la matière première permet dans le cas du romarin par exemple, une amélioration du rendement d'extraction de l'ordre de 20 à 30%. Pour ce faire, on incube la matière végétale, par exemple les feuilles de romarin, avec 1% en poids d'une glucanase en milieu aqueux, par exemple à environ 40°C pendant environ 4 h sous agitation, puis on filtre ou centrifuge la suspension et on sèche la matière végétale ainsi traitée.

Le rapport pondéral huile/matière végétale est choisi pour obtenir une concentration élevée d'antioxydant avec un rendement acceptable. Il est de préférence 0,3 à 0,7.

Le prétraitement est ensuite suivi d'une extraction sous forte pression au cours de laquelle la suspension de matière végétale dans l'huile est en même temps filtrée. On utilise dans ce but une presse, de préférence à piston équipée d'un dispositif de filtration en sortie. La pression appliquée est progressivement augmentée, par exemple par palliers jusqu'à une valeur supérieure ou égale à 40 b et maintenue pendant une ou plusieurs h.

Dans le but d'augmenter encore la quantité d'antioxydant extrait, on peut recommencer l'extraction en recyclant un premier extrait d'antioxydant dans l'huile en le mettant en présence d'une nouvelle charge de matière végétale. On peut ainsi obtenir une composition lipidique contenant jusqu'à 7% en poids d'antioxydant.

Suivant le type de matière végétale mise en oeuvre, par exemple une épice, et le type d'utilisation envisagée, il peut être nécessaire de décolorer et de désodoriser l'extrait d'antioxydant. Pour décolorer, on mélange la composition lipidique avec du charbon actif ou de la terre décolorante, on chauffe et on filtre. Les substances responsables de la couleur sont alors retenues sur l'adsorbant.

Pour désodoriser, on effectue de préférence une distillation sous vide, par exemple à contre-courant en film tombant ou en couche mince avec de la vapeur surchauffée.

Les exemples ci-après illustrent l'invention. Dans ceux-ci, les parties et pourcentages sont pondéraux, sauf indication contraire.

### Exemple 1

A 500g de feuilles de romarin hachées et strippées à la vapeur, on ajoute 250 ml de MCT sous agitation et on maintient le tout à 100°C pendant 60 min. dans un mélangeur Lödige (R). Après pressage à 500 b dans une presse à piston Carver (R) équipée d'une cage filtrante pendant 60 min, on recueille une huile limpide contenant 1,76 % d'antioxydant (analysé en tant que somme du carnosol et de l'acide carnosique par chromatographie liquide haute perfommance, HPLC). Le rendement est 63 % (relativement au MCT mis en oeuvre).

### Exemple 2

On procède comme à l'exemple 1, sauf que l'on ajoute 250 ml d'eau déminéralisée aux feuilles de romarin hachées et strippées avant le mélange avec le MCT. On obtient alors une huile limpide contenant 2,11 % d'antioxydant. Le rendement par rapport au MCT engagé est 57%.

### Exemple 3

On humidifie 40 kg de romarin strippé à la vapeur et moulu avec 4 kg d'eau déminéralisée pendant 20 min. à 120°C sous agitation dans un mélangeur Lödige (R). On y ajoute 20 kg de MCT à 100°C, puis on homogénéise ce mélange pendant 60 min. à 100°C. On presse alors le mélange à 70 b pendant 3 h dans une presse à piston Fujiwara (R) munie d'une cage filtrante et on obtient une huile limpide avec un rendement de 66 % par rapport au MCT engagé, contenant 4,8 % d'antioxydant.

### Exemple 4

On traite 1 kg de feuilles de romarin non-strippées et moulues avec 100 ml d'eau et 500 ml d'huile végétale non laurique riche en C18:1 trans, Durkex LC 550 (R) à 100°C pendant 1 h. Le pressage comme à l'exemple 1 conduit à une huile limpide contenant 1,3 % d'antioxydant avec un rendement de 55 % (calculé sur l'huile engagée).

### Exemple 5

On traite 3 kg de romarin strippé et moulu avec 300ml d'eau déminéralisée auquel on ajoute 1,5 kg de MCT pendant 60 min. à 100°C. On presse ensuite ce mélange comme à l'exemple 1 et on recueille 730 g d'extrait limpide. On ajoute à cet extrait 1,46 kg de romarin strippé et moulu ainsi que 146 ml d'eau déminéralisée, puis on traite le mélange une nouvelle fois à 100°C pendant 60 min. et on le presse comme précédemment. On recueille ainsi une huile limpide contenant 3,5 % d'antioxydant.

### Exemples 6-9

6. On traite 740 g de romarin non strippé et moulu en présence de 4,5 l d'eau avec 7,5 g de Glucanex ((R), Novo) pendant 4 h à 40°C, à pH 4, puis on filtre et on sèche le résidu. On ajoute alors 75 ml d'eau déminéralisée à la matière végétale traitée enzymatiquement, puis 370 g de MCT et on traite le mélange 1 h à 100°C. On presse enfin le mélange comme à l'exemple 1 et on recueille une huile limpide contenant 1,95 % d'antioxydant avec un rendement de 74 % par rapport au MCT engagé.

7. En procédant comme à l'exemple 6 ci-dessus, avec 1 % d'enzyme Olivex ((R), Novo), à pH 5,3 et à 35°C pendant 4 h, on recueille une huile limpide contenant 1,8 % d'antioxydant.

8. En traitant le romarin comme à l'exemple 6 ci-dessus mais avec l'enzyme Rohament CT (R), Rohm, à pH 4 et à 45°C pendant 4 h, onreceuille une huile limpide contenant 1,85 % d'antioxydant.

9. En procédant comme à l'exemple 6 ci-dessus mais avec l'enzyme Rohament O (R), Rohm, à pH 4,5 et à 50°C pendant 4 h, on obtient une huile limpide contenant 1,8 % d'antioxydant.

### Exemple 10

On traite 200 g de feuilles sèches de sauge non strippées avec 100 ml d'eau déminéralisée, puis 100g de MCT pendant 1 h à 100°C, puis on presse avec une presse à piston Carver (R) équipée d'une cage filtrante. On obtient ainsi une huile limpide avec un rendement de 68 % par rapport au MCT engagé.

### Exemples 11-13

11. On traite comme à l'exemple 10 ci-dessus 100 g d'un cocktail d'épices provencal comprenant 40 % de romarin, 20 % de sauge, 20 % de thym et 20 % d'origan. en présence de 10 ml d'eau déminéralisée et de 50 g de pressage, on recueille une huile limpide avec un rendement de 79 % par rapport au MCT engagé.

12. En procédant comme à l'exemple 11 ci-dessus à partir de 100 g d'un cocktail d'épices oriental comprenant 50 % de gingembre, 25 % de Curcuma et 25 % de poivre de cayenne, on obtient une huile limpide avec un rendement de 88 % par rapport au MCT engagé.

13. En procédant comme à l'exemple 11 ci-dessus à partir de 500 g de pellicules de cacao sèches en présence de 100 ml d'eau déminéralisée et avec 250 g de MCT, mais avec une extraction à 100°C, on obtient une huile de couleur jaune avec un rendement de 33 % par rapport au MCT engagé.

## Revendications

1. Procédé d'extraction d'antioxydant à partir d'une substance végétale sous forme liquide, caractérisé par le fait que l'on met en contact une matière végétale riche en antioxydants et une huile servant de véhicule, que ladite huile est liquide à température ambiante, qu 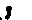 elle constitue un bon solvant des principes antioxydants et qu 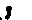 elle est peu sensible à l 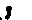 oxydation, puis que l 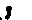 on presse le mélange à une pression supérieure ou égale à 40bar et on le filtre, en même temps qu 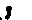 on le presse, pour le débarrasser des solides en suspension sans éliminer l'huile mise en oeuvre.

2. Procédé selon la revendication 1, caractérisé par le fait que l'on utilise comme matière végétale de départ, toute épice contenant des antioxydants phénoliques, notamment le romarin, la sauge, le thym, l'origan, la sariette, le gingembre, le curcuma, le piment ou les pellicules de cacao seule ou en mélange.

3. Procédé selon la revendication 1, caractérisé par le fait que l'huile utilisée comme véhicule est choisie parmi un mélange de triglycérides d'acides gras saturés en C6-C12, l'huile d'olive, une huile hybride de carthame ou de tournesol ou une huile végétale non laurique de graines de cotton ou de soja, hydrogénée et fractionnée.

4. Procédé selon la revendication 1, caractérisé par le fait que le mélange de la matière première végétale et de l'huile se fait à la température ambiante pour maintenir les principes aromatiques.

5. Procédé selon la revendication 1, caractérisé par le fait que le mélange de la matière première végétale et de l'huile a lieu à température élevée, de 100 à 140°C et de préférence à environ 120°C.

6. Procédé selon la revendication 4 ou 5, caractérisé par le fait que l'on effectue le prétraitement en présence d'eau, en ajoutant au mélange, de préférence environ 10% en poids d'eau par rapport à la matière végétale.

7. Procédé selon la revendication 4 ou 5, caractérisé par le fait que l'on effectue un prétraitement enzymatique de la matière première en l'incubant avec une glucanase en milieu aqueux, puis on filtre ou centrifuge la suspension et on sèche la matière végétale ainsi traitée.

8. Procédé selon la revendication 4 ou 5, caractérisé par le fait que le rapport pondéral huile/matière végétale est 0,3 à 0,7.

9. Procédé selon la revendication 1, caractérisé par le fait que le pressage est effectué dans une presse à piston équipée d'une cage filtrante permettant le pressage et la filtration en une seule opération.

## Claims

1. Process for extracting an antioxidant from a vegetable substance in liquid form, characterized in that vegetable matter rich in antioxidants is put into contact with an oil acting as a vehicle, that the said oil is liquid at ambient temperature, that it constitutes a good solvent for the antioxidant principles and that it is not sensitive to oxidation, that the mixture is then pressed at a pressure greater than or equal to 40 bar and filtered, whilst it is pressed, to remove suspended solids without eliminating the oil used.

2. Process according to claim 1, characterized in that the starting vegetable matter used is any spice containing phenolic antioxidants, in particular rosemary, sage, thyme, marjoram, savory, ginger, turmeric, pimento or cocoa bean skins alone or in a mixture.

3. Process according to claim 1, characterized in that the oil used as the vehicle is selected from a mixture of saturated C6-C12 saturated fatty acid triglycerides, olive oil, a hybrid safflower or sunflower oil or a hydrogenated and fractionated non-lauric cottonseed or soya bean vegetable oil.

4. Process according to claim 1, characterized in that the vegetable raw material and the oil are mixed at room temperature to retain the aromatic principles.

5. Process according to claim 1, characterized in that the vegetable raw material and the oil are mixed at a high temperature of 100 to 140°C and preferably at approximately 120°C.

6. Process according to claim 4 or 5, characterized in that pretreatment is carried out in the presence of water, by preferably adding approximately 10 % by weight of water, based on the vegetable matter, to the mixture.

7. Process according to claim 4 or 5, characterized in that the raw material is subjected to an enzymatic pretreatment by incubating it with a glucanase in an aqueous medium, filtering or centrifuging the suspension and drying the vegetable matter thus treated.

8. Process according to claim 4 or 5, characterized in that the ratio by weight of oil to vegetable matter is 0.3 to 0.7.

9. Process according to claim 1, characterized in that pressing is carried out in a piston press equipped with a filtration cage enabling pressing and filtration to be carried out in a single operation.

## Patentansprüche

1. Verfahren zur Extraktion eines Antioxidans aus einer pflanzlichen Substanz in flüssiger Form, dadurch gekennzeichnet, daß man eine pflanzliche Substanz, die reich an Antioxidantien ist, und ein Öl, das als Träger dient, in Kontakt bringt, wobei das Öl bei Umgebungstemperatur flüssig ist, ein gutes Lösungsmittel für die antioxidativen Bestandteile ist und wenig oxidationsempfindlich ist, daß man die Mischung einer Druckbehandlung bei mehr als oder gleich 40 bar aussetzt und während der Zeit der Druckeinwirkung filtriert, um die Feststoffe der Suspension zu entfernen, ohne das eingesetzte Öl zu eliminieren.

2. Verfahren nach Anspruch 1, dadurch gekennzeichnet, daß man als pflanzliches Ausgangsmaterial solche Gewürze verwendet, die phenolische Antioxidantien enthalten, insbesondere Rosmarin, Salbei, Thymian, Oregano, Bohnenkraut, Ingwer, Kurkuma, Piment oder Kakaoschalen allein oder in Mischung.

3. Verfahren nach Anspruch 1, dadurch gekennzeichnet, daß das als Träger verwendete Öl ausgewählt ist aus einer Mischung von Triglyceriden von gesättigten C₆-C₁₂-Fettsäuren, Olivenöl, einem Saflor- oder Sonnenblumenhybridöl oder einem laurylfreien Pflanzenöl aus Baumwollsamen oder Soja, das hydriert und fraktioniert ist.

4. Verfahren nach Anspruch 1, dadurch gekennzeichnet, daß man die Mischung des pflanzlichen Ausgangsmaterials und des Öls bei Umgebungstemperatur herstellt, um die aromatischen Prinzipien zu erhalten.

5. Verfahren nach Anspruch 1, dadurch gekennzeichnet, daß man die Mischung des pflanzlichen Ausgangsmaterials und des Öls bei einer erhöhten Temperatur von 100 bis 140°C und vorzugsweise um 120°C durchführt.

6. Verfahren nach Anspruch 4 oder 5, dadurch gekennzeichnet, daß man die Vorbehandlung in Gegenwart von Wasser durchführt, das man der Mischung hinzufügt, und zwar vorzugsweise von etwa 10 Gew.-% Wasser bezogen auf das pflanzliche Material.

7. Verfahren nach Anspruch 4 oder 5, dadurch gekennzeichnet, daß man eine enzymatische Vorbehandlung des Ausgangsmaterials durch Inkubation mit einer Glucanase in wäßrigem Milieu durchführt, anschließend die Suspension filtriert oder zentrifugiert und das so behandelte pflanzliche Material trocknet.

8. Verfahren nach Anspruch 4 oder 5, dadurch gekennzeichnet, daß das Gewichtsverhältnis Öl/pflanzliches Material 0,3 bis 0,7 beträgt.

9. Verfahren nach Anspruch 1, dadurch gekennzeichnet, daß man die Druckbehandlung in einer Kolbenpresse durchführt, die mit einem Filtereinsatz ausgerüstet ist, und die es gestattet, die Druckbehandlung und die Filtration als eine einzige Operation durchzuführen.
